# EUROPEAN PATENT SPECIFICATION

(11) **EP 1 967 076 B1**
(45) Date of publication and mention of the grant of the patent: **27.07.2011**
(21) Application number: 06835057.8
(22) Date of filing: 14.12.2006
(51) Int. Cl.: A23F 5/24, A23L 2/38, A23L 2/44

(54) **CONTAINER-PACKED COFFEE BEVERAGE AND PROCESS FOR PRODUCTION THEREOF**
BEHÄLTERVERPACKTES KAFFEEGETRÄNK, UND VERFAHREN ZU SEINER HERSTELLUNG
BOISSON A BASE DE CAFE CONDITIONNEE DANS UN RECIPIENT ET SON PROCEDE DE PRODUCTION

(30) Priority: 30.12.2005 JP 2005380686
(43) Date of publication of application: 10.09.2008
(73) Proprietor: ITO EN, LTD., Tokyo 151-8550 (JP)
(72) Inventor: SUGIMOTO, Akio, ITO EN, LTD., Makinohara-shi, Shizuoka 4210516 (JP); KINUGASA, Hitoshi, ITO EN, LTD., Makinohara-shi, Shizuoka 4210516 (JP); TSUKAMOTO, Tsutomu, ITO EN, LTD., Makinohara-shi, Shizuoka 4210516 (JP); OCHI, Takayuki, ITO EN, LTD., Makinohara-shi, Shizuoka 4210516 (JP); MATSUMOTO, Nobuo, ITO EN, LTD., Makinohara-shi, Shizuoka 4210516 (JP); YASHIRO, Mitsuo, ITO EN, LTD., Shibuya-ku, Tokyo 1518550 (JP)
(74) Representative: Gille Hrabal Struck Neidlein Prop Roos
(86) International application number: PCT/JP2006/325445
(87) International publication number: WO 2007/077746

(56) References cited:
- WO-A1-2005/072533
- CA-C- 1 331 846
- GB-A- 455 902
- JP-A- 11 009 189
- JP-A- 2000 175 623
- JP-A- 2004 261 170
- DOGASAKI C. ET AL.: 'Identification of Chemical Structure of Antibacterial Components against Legionella pneumophila in a Coffee Beverage' JOURNAL OF THE PHARMACEUTICAL SOCIETY OF JAPAN vol. 122, no. 7, 2002, pages 487 - 494, XP003015071

## Description

### Technical Field

The present invention relates to a method for preparing a container-packed coffee beverage containing chlorogenic acids to a suitable extent, and furthermore, having an excellent taste and whose deterioration at heating has been suppressed.

### Background Art

Coffee is a tasty beverage people enjoy drinking world-wide. In addition to conventional extraction from roasted beans and instant coffee, readily ingestible container-packed coffee beverages, are widely popular. In addition, useful constituents contained in coffee have been drawing attention in recent years. Chlorogenic acids are one among the useful constituents contained in coffee beverage. SOD-like activity is known as an effect of chlorogenic acids, reported to have the activity of suppressing the generation of reactive oxygen species and lipid peroxide involved in aging and a variety of sicknesses, and to have antioxidant activity (refer for instance to Japanese Patent Application Laid-open No. 2001-136910 and Japanese Patent Application Laid-open No. 2002-080351). The approximate amount of natural polyphenols such as chlorogenic acids to be ingested per day is 1g per adult (refer for instance to Japanese Patent Application Laid-open No. 2005-312301), and simpler ingestion methods have been desired. As one such method, there is a method of increasing antioxidant activity by electrically processing the food source containing chlorogenic acids (refer for instance to Japanese Patent Application Laid-open No. 2003-102403).

In addition, among the chlorogenic acids, 3-caffeoylquinic acid, generally called neochlorogenic acid (refer for instance to Japanese Patent Application Laid-open No. 2004-033023), has been reported in particular to have an excellent antioxidant activity, and as simple ingestion methods thereof, there exist a method of separating chlorogenic acids by dextran gel to modify the mixing ratio (refer for instance to Japanese Patent Application Laid-open No. H09-143465) and a method of alkaline processing an aqueous solution containing chlorogenic acids (refer for instance to Japanese Patent Application Laid-open No. 2000-063827) .

Elsewhere, 3-caffeoylquinic acid is known to be generated by heating 5-caffeoylquinic acid in alkali (refer for instance to "Quantification of chlorogenic acids and caffeine in coffee-containing beverage by high performance liquid chromatography" Takashi Ueki, Hiroshi Honda and Shiro Sakurai, Agricultural and Forestry Products Inspection Institute Issue No. 10, March 1986 (http://www.cfqlcs.go.jp/technical_information/investigation_research_report/rs10.htm ).

In addition, chlorogenic acids are known to be in an unstable state when coffee beans are roasted, and that if heating history accumulates such as carrying out sterilization treatments on coffee extract, they decompose into small molecule organic acids, such as, acetic acid, formic acid, malic acid and citric acid, and as a result, sourness increases over time triggering deterioration (for instance Japanese Patent Application Laid-open No. H07-050993).

Meanwhile, there is a problem that when a container-packed beverage is heated at a store or in an automatic vending machine, the quality thereof remarkably deteriorates due to heating, and in order to solve this, for instance, a method of masking by adding flavor, or a method of adding cyclodextrin and ascorbic acid or ascorbic acid salt have been proposed (refer for instance to Japanese Patent Application Laid-open No. 2004-073057).

However, even if any of the above methods is selected, there are problems such as, caused by the addition of another constituent or carrying out special treatment subsequently to coffee beverage extraction; the original coffee taste is lost and the production cost increases due to the additional steps of production. In addition, since chlorogenic acids cause distracting flavors when contained in large quantities (refer for instance to Japanese Patent Application Laid-open No. 2005-333927, Japanese Patent Application Laid-open No. 2003-204755, Japanese Patent Application Laid-open No. 2003-204756), preserving the taste while leaving high concentrations of chlorogenic acids contained is difficult.

WO 2005-072533 A1 deals with packed beverages to provide coffee compositions which display a satisfactory antihypertensive effect. This effect is achieved by maintaining the concentration of hydroxyhydroquinone within a specific range. The roasting method is not emphasized, the document describes three examples 11 to 13 which are prepared by extracting roasted coffee beans, whereby the L value of the roasted beans is 22. The document is silent to the aspect of the amount of 5-caffeoylquinic acid in the chlorogenic acids and does not mention the relative presence of the two constituents α and β.

JP 2000 175623 A describes the preparation of a coffee beverage through the initial preparation of different extracts from coffee bean powder which are then mixed to obtain the wanted beverage. The document does not appear to mention the blends of the coffee beans according to the roasting state, nor the adjustment of the amount of 5-caffeoylquinic acid. The constituents α and β are not mentioned either.

Dogasaki et al. (in Yakugaku Zasshi 2002 ; 122(7) : 487-494) describes the chemical structures of antibacterial components in brewed coffee.

JP 2004 261170 A describes the preparation of a coffee beverage by using a plurality of extraction tanks.

In CA 1,331,846 the preparation of coffee with an increased chlorogenic acid content is described. The document regularly mentions blends of coffee beans, but does not specify the choice of these blends. The document does not mention the adjustment of the amount of 5-caffeoylquinic acid. The constituents α and β are not mentioned either.

GB 455,902 A describes a process to improve the conservation of roasted coffee, the teaching is concentrated on the amount of chlorogenic acid in the roasted coffee.

JP 11-009189 A describes the addition of chlorogenic acids to improve the stability of coffee beverages.

### Disclosure of the Invention

An object of the present invention is to provide a manner for preparing a container-packed coffee beverage containing chlorogenic acids to a suitable extent, and furthermore, having an excellent taste and whose deterioration at heating has been suppressed.

### Best Mode for Carrying out the Invention

After earnest studies in order to resolve the above issues, the present inventors reached the ideas for the present invention. Specifically, the present inventors discovered that deterioration during heating of a container-packed coffee beverage could be suppressed by setting the content ratio of 5-caffeoylquinic acid among the chlorogenic acids within a specific range, and that taste could be improved by setting the peak area ratio of constituents α and β within a specific range.

More specifically, the present invention is as follows:
1. A method for preparing a container-packed coffee beverage,
   comprising the steps of
   preparing a coffee extract by extracting coffee beans;
   adding a constituent selected from the group consisting of sugars, milk constituent, antioxidant, pH adjuster, emulsifier and flavors; and
   filling the preparation into a container;
   in which the coffee beans are a blend of coffee beans containing roasted coffee beans having an L value of 16 to 21.5 and roasted coffee beans having an L value of 22 to 33, at a ratio of 100:0 to 60:40; and
   wherein the following constituents (A), (B) and (C) are contained in the coffee extract: .
   (A) α constituent:
      of which the peak, appearing at a retention time of 2.0 to 2.3 minutes and having a maximum absorption wavelength of 257.9 nm, is obtained in a chromatogram by constituent analysis of the coffee extract at a detection wavelength of 260 nm using a high performance liquid chromatography apparatus under conditions given below;
   (B) β constituent:
      of which the peak, appearing at a retention time of 2.7 to 3.2 minutes and having a maximum absorption wavelength of 263.8 nm, is obtained in a chromatogram by constituent analysis of the coffee extract at a detection wavelength of 260 nm using a high performance liquid chromatography apparatus under conditions given below; and
   (C) chlorogenic acids;
      whereby the peak area ratio of constituent (A) and constituent (B) {(A)/(B)}×100 is 30 to 100; and
      the chlorogenic acids contain 5-caffeoylquinic acid at a content in the constituent (C) which is adjusted to be 28.0 to 35.0% by weight;
      the conditions for performing the high performance liquid chromatography being as follows:
      Column: Inertsil ODS-2 ∅ 3.0 x 250mm;
      Mobile phase: Gradient elution method by
         A Solution 3% acetonitrile solution containing 0.05M acetic acid;
         B Solution 100% acetonitrile solution containing 0.05M acetic acid;
      Volume injected:10 µL;
      Flow rate: 0.43 mL/min;
      Column temperature: 40 degree C;
      Detector: PDA UV 210nm to 400nm.
2. The method for preparing a container-packed coffee beverage as recited in the above 1, wherein chlorogenic acids are added to said obtained coffee extract.

Hereinafter, embodiments of the present invention will be described. The terms used in the specification are defined as follows.

"(A) Peak α constituent" is an unidentified constituent, whose amount increases as the coffee beans are the more roasted; concretely, a constituent corresponding to peak obtained during constituent analysis of coffee extract using high performance liquid chromatography (HPLC), appearing at a detection wavelength of 260nm and a retention time of 2.0 to 2.3 minutes. The constituent can be measured by an HPLC apparatus. As HPLC apparatus, commercially available apparatus, for instance, "LaChrom" manufactured by Hitachi Ltd. and "LC-10A" manufactured by Shimadzu Corporation can be used; however, there are no particular limitations. The measurement conditions are set suitably so that the constituent can be detected. The column is not limited in particular as long as it can detect the constituent; however, the use of "inertsil ODS-2 Φ 3.0 × 250mm" (manufactured by GL Sciences Inc.) is preferred.

"(B) Peak β constituent" is, in contrast to the α constituent, an unidentified constituent decreasing as coffee beans are more roasted, and can be measured by an HPLC apparatus under the same conditions as the α constituent. Concretely, it is a constituent corresponding to a peak obtained during constituent analysis of a coffee extract using an HPLC apparatus, appearing at a detection wavelength of 260nm and a retention time of 2.7 to 3.2 minutes.

In the specification, "(C) chlorogenic acids" is a collective term grouping 3-caffeoylquinic acid, 5-caffeoylquinic acid, 4-caffeoylquinic acid, 3-feruloylquinic acid, 5-feruloylquinic acid and 4-feruloylquinic acid. In addition, there are no particular limitations with respect to derivation thereof, and addition or elimination treatment may be carried out artificially.

"5-caffeoylquinic acid" is one of the constituents contained in constituent (C) chlorogenic acids. Weakest against heat among the chlorogenic acids, it has the property of either decomposing into small molecule organic acid, or isomerizing into 3-caffeoylquinic acid, as coffee beans are roasted. Therefore, the content in 5-caffeoylquinic acid varies during roasting of coffee beans, and the total amount of chlorogenic acids decreases as a result. In addition, although the antioxidant activity of the chlorogenic acids becomes higher when the content ratio of 3-caffeoylquinic acid rises due to the isomerization, if the content increases excessively the contribution of 3-caffeoylquinic acid to the antioxidant activity decreases. The small molecule organic acids generated by the decomposition of 5-caffeoylquinic acid have strong sourness and may become a cause of taste deterioration over time. Note that the deterioration is known to be attributable to generation of reactive oxygen species (radical). The higher the amount of radicals generated the more advanced the deterioration, and conversely, if the amount of radicals generated can be held down, the deterioration can be suppressed.

According to the present invention, by adjusting the above-mentioned four constituents to appropriate ranges, a container-packed coffee beverage can be obtained, containing chlorogenic acids to a suitable extent, and furthermore, having excellent taste and which deterioration at heating has been suppressed. From the viewpoints of chlorogenic acids amount and taste, the peak area ratio {(A)/(B)} × 100 of (A) Constituent α and (B) Constituent β is adjusted to 30 to 100. Furthermore, in order to maintain an excellent taste, the adjustment is such that the ratio becomes 40 to 75, and preferably 50 to 65. The reasons are, at less than 30, a decrease in taste is observed, such as chlorogenic acids-derived distracting flavor becomes noticeable, and at 100 or greater, the amount of chlorogenic acids becomes excessively small.

From the viewpoints of quality and antioxidant activity, 360ppm to 840ppm, preferably 440ppm to 710ppm and more preferably 490ppm to 600ppm of chlorogenic acids (C) in values converted to per 1.0% by weight of amount of solid coffee may be contained. If 840ppm is exceeded, care must be taken, as a large amount of chlorogenic acids decomposes into small molecule organic acid due to heat, readily generating sourness, or the like, over time. From the amount of chlorogenic acids and the viewpoints of quality and antioxidant activity, the content ratio of 5-caffeoylquinic acid is adjusted to 28.0% to 35.0%, more preferably 28.8% to 31.5% and even more preferably 29.5% to 31.0%. At less than 28.0%, on top of the amount of chlorogenic acids becoming excessively small, the content ratio of 3-caffeoylquinic acid becomes excessively high, and contribution to antioxidant activity decreases. If 35.0% is exceeded, on top of the content ratio of 3-caffeoylquinic acid becomes small, and the antioxidant activity becoming low, sourness increases over time due to the content in 5-caffeoylquinic acid being high.

While the container-packed coffee beverage prepared according to the present invention can also be obtained by extracting roasted coffee beans in water or hot water by a conventional method, as the composition of the present invention is difficult to fulfill only with a single extract, it is obtained by adjusting the constituents (A), (B) and (C) to give the previously mentioned composition, by blending of a plurality of extracts and/or addition of each constituent. For instance, deeply roasted coffee beans with an L value of 16 or greater and slightly roasted coffee beans with an L value of 33 or less may be blended at a ratio of 90:10 and extracted. In more detail, the L value of deeply roasted coffee beans is adjusted to 16 to 21.5, more preferably to 16.5 to 20, even more preferably to 17 to 19.5, and particularly preferably to 17.5 to 18.0. The L value of slightly roasted coffee beans is adjusted to 22 to 33, more preferably to 22.5 to 27, even more preferably to 23 to 26, and particularly preferably to 23.5 to 25.5. An object of the present invention is achieved by bringing the blending ratio to 100:0 to 60:40, more preferably to 95:5 to 70:30, and even more preferably to 90:10 to 80:20.

As places of production of coffee beans to be used, Brazil, Columbia, Tanzania, Mocha and the like can be cited, without any particular restrictions. In addition, as bean product species, arabica species, robusta species, and the like may be cited. The coffee beans may be used as one species alone or by blending a plurality of species. Roasting is carried out using a general method, and the extent of roasting is adjusted suitably to obtain the extract necessary for the adjustment of each constituent. Concretely, bitterness becomes strong if roasting is deep and sourness becomes strong if roasting is slight.

The L value of the coffee beverage is preferably 28 to 62, more preferably 33 to 57, and even more preferably 38 to 52. Herein, an L value is a value that indicates luminosity. The L value of a coffee beverage can be measured according to common procedure using a colorimeter CT-310 (manufactured by Minolta) in a 1cm cell.

The container-packed coffee beverage prepared according to the present invention can also be prepared by adding each constituent specified in the present invention alone. When adjusting the composition by adding chlorogenic acids alone, the addition of an extract of a plant containing chlorogenic acids is preferred. As plant raw materials containing chlorogenic acids that can be used herein, coffee (bean), howthorn, grape, Ligusticum wallichii, angelica acutiloba, coptis japonica, turmeric, asafoetida, sweet potato, molokheiya, sunflower (seed), apple (fruit), tobacco (leaf), pear (leaf), peach, and the like, may be cited. From the viewpoints of the taste of the coffee beverage, coffee extract is preferred. Furthermore, the coffee extract is preferably obtained from green coffee beans. Green coffee bean (i.e., raw coffee bean) extract can be obtained by grinding green coffee beans as necessary and extracting using ethanol, hydrous ethanol, methanol or the like, at a temperature of room temperature to 100°C. In addition a commercially available product, such as, flavor holder RC-30R, FH-1242, or the like, (Manufactured by T. Hasegawa Co.,Ltd.) can also be used. In addition, when adding 5-caffeoylquinic acid alone, after grinding with sunflower seed as a material and extracting with water or hydrous alcohol, the obtained sunflower seed extract is adsorbed onto a styrene -divinyl benzene series porous polymerization resin, then eluted with an organic solvent such as methanol, the obtained chlorogenic acids-containing extract is further passed over a dextran gel-packed column and the eluate obtained by eluting with water can be used.

In addition, as desired, sugars, such as, sucrose, glucose, fructose, xylose, fructose-glucose solution and sugar alcohol, milk constituent, antioxidant, pH adjuster, emulsifier, flavor, and the like, can be added to the container-packed coffee beverage prepared according to the present invention. As milk constituents, raw milk, cow milk, whole dry milk, nonfat dry milk, raw cream, concentrated milk, nonfat milk, partially nonfat milk, condensed milk, and the like, may be cited. As the pH of the coffee beverage of the present invention, 3 to 7, furthermore 4 to 7, and in particular 5 to 7 are desirable from the aspect stability of the beverage.

As antioxidants, ascorbic acid or a salt thereof, erythorbic acid or a salt thereof, and the like, may be cited, among which, ascorbic acid or a salt thereof is particularly desirable.

As emulsifiers, sucrose fatty acid ester, glycerin fatty acid ester, microcrystal cellulose, lecithins, sorbitan fatty acid ester, polyglycerol fatty acid ester, and the like are preferred.

As containers used in the present invention, PET bottle, can (aluminum, steel), paper, retort pouch, bottle (glass), and the like, may be cited.

If heat sterilization is possible after filling into a container, as in the case of a metal can, sterilization treatment of coffee extract in the present invention is carried out under sterilization conditions defined in food sanitation law. Regarding those containers for which retort sterilization is not possible, such as PET bottle and paper container, methods such as sterilizing beforehand under equivalent sterilization conditions to conditions defined in the Food Sanitation Law, for instance, with a plate heat exchanger at high temperature and for a short-time, then cooling to a given temperature and filling a container, are adopted.

### Example

Hereinafter, the present invention will be described in further detail with examples; however, the scope of the present invention is not limited by these examples and the like.

### [1. Analysis of chlorogenic acids and constituents (α and β)]

The gradient elution method by HPLC was used as the method for analyzing chlorogenic acids and constituent (α and β). As the analyzer, Waters 2695 separation module (manufactured by Nihon Waters K.K.) was used as the HPLC main unit and Waters 2996 PDA (manufactured by Nihon Waters K.K.) was used as the detector. The analytical conditions were as follows:

**(Table 1)**

| | |
|---|---|
| Column: Inertsil | ODS-2 ∅ 3.0 x 250mm |
| Mobile phase: | |
| A Solution | 3% acetonitrile solution containing 0.05M acetic acid |
| B Solution | 100% acetonitrile solution containing 0.05M acetic acid |
| | Gradient elution method by (the program is shown in Table 1) |
| Volume injected: 10 µ L | |
| Flow rate: 0.43mL/min | |

Column temperature: 40 degree C

Detector: PDA UV 210nm to 400nm (retention time and detection wavelength of each constituent are shown in Table 2)

**Gradient Program**

| (min) | Flow rate (mL) | A Solution (%) | B Solution (%) |
|---|---|---|---|
| INITIAL | 1.0 | 100 | 0 |
| 5.0 | 1.0 | 100 | 0 |
| 20.0 | 1.0 | 80 | 20 |
| 35.0 | 1.0 | 80 | 20 |
| 45.0 | 1.0 | 0 | 100 |
| 60.0 | 1.0 | 0 | 100 |
| 70.0 | 1.0 | 100 | 0 |
| 100.0 | 1.0 | 100 | 0 |

**(Table 2)**

| Retention Time and Detection Wavelength | | |
|---|---|---|
| Chlorogenic acids | Retention time (min) | Detection wavelength |
| 3-caffeoylquinic acid (3-CQA) | 16.396 | UV 325 nm |
| 5-caffeoylquinic acid (5-CQA) | 18.398 | UV 325 nm |
| 4-caffeoylquinic acid (4-CQA) | 19.490 | UV 325 nm |
| 3-feruloyfquinic acid (3-FQA) | 20.204 | UV 325 nm |
| 5-feruloylquinic acid (5-FQA) | 22.563 | UV 325 nm |
| 4-feruloylquinic acid (4-FQA) | 23.267 | UV 325 nm |

| Constituent | Retention time (min) | Detection wavelength |
|---|---|---|
| α constituent | 2.217 | UV 260 nm |
| β constituent | 2.915 | UV 260 nm |

### [(1)-1 Chlorogenic acids quantification method]

Calibration curve construction method:
Standards for 5-caffeoylquinic acid (5-CQA) (Manufactured by Wako Pure Chemical Industries Ltd.) were prepared with distilled water so as to yield three steps of concentrations in the order range of 20ppm to 100ppm to serve as standard solutions. A standard solution of each concentration was injected into the HPLC, and a three-point calibration curve was constructed from the peak area values and concentrations.
Sample adjustment and quantification method:
   Accurately, 5mL of each sample was measured, placed in a 25mL measuring flask, brought to a defined volume with distilled water, filtered with a 0.45µm filter, and then injected into HPLC to quantify 5-CQA by the three-point calibration curve method mentioned previously. In addition, since no standard was available for the quantification of 3-caffeoylquinic acid (3-CQA), 4-caffeoylquinic acid (4-CQA), 3-feruloylquinic acid (3-FQA), 5-feruloylquinic acid (5-FQA) and 4-feruloylquinic acid (4-FQA), only qualification was carried out, the area value of each peak was calculated as an estimated value using the 5-CQA calibration curve, the total value of the 6 types chlorogenic acids was used as the amount of chlorogenic acids.

### [(1)-2 Method for the analysis of constituents (α and β)]

Although constituents (α and β) are unidentified, the peak area value of each constituent was analyzed using the chromatogram at the detection wavelength of 260nm obtained during (1)-1 Analysis of chlorogenic acids, and the area ratio (α/β value) determined by {area of a constituent/area of β constituent}×100 was calculated.

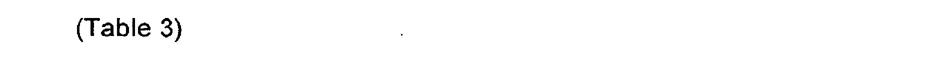

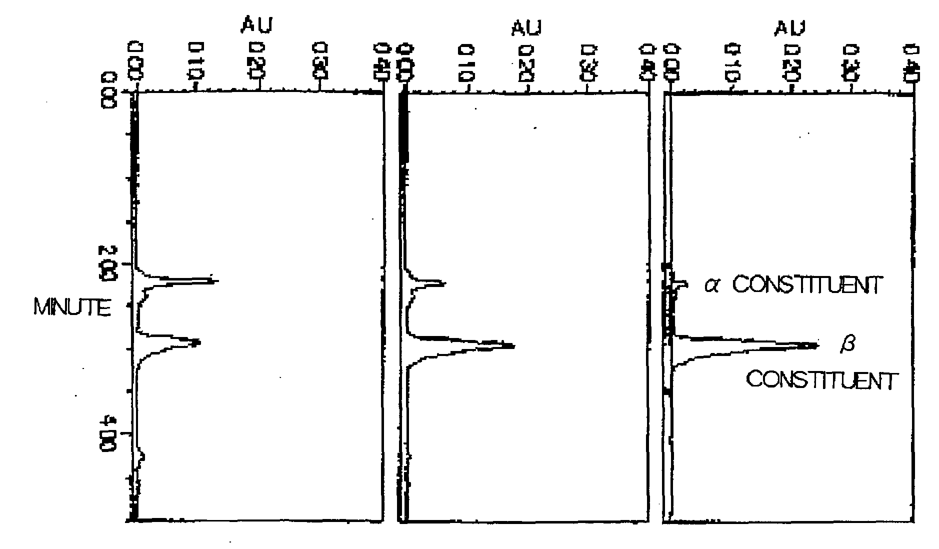

Regarding the α constituent, it became clear that it was a constituent detected in a retention time of 2.217min under the HPLC conditions mentioned previously, with a maximum absorption wavelength of 257.9nm, and increased by roasting. Regarding β constituent, it became clear that it was a constituent detected in a retention time of 2.915min under the HPLC conditions mentioned previously, with a maximum absorption wavelength of 263.8nm and decreased by roasting. In Table 3, chromatograms at a detection wavelength of 260nm are shown for coffee beverages test-produced with each raw material bean. At the top of Table 3, it is shown that α constituent and β constituent of a coffee beverage test-produced with slightly roasted beans, In the middle of Table 3, it is shown that α constituent and β constituent of a coffee beverage test-produced with medium roasted beans, and at the bottom of Table 3, it is shown that α constituent and β constituent of a coffee beverage test-produced with deeply roasted beans.

### [(1)-3 Method for measurement of hydroxy radical]

A radical (reactive oxygen species) is an index of quality deterioration, indicating the higher the quantity generated the more progressed the deterioration. For the method for measurement of hydroxy radical, each sample was heated at 60°C, and hydroxy radical generated at each time point was measured by the ESR method. (according to T. Am. Soc. Brew. Chem. 54 (4): 198-205, 205-211, 1996) For the reagent, spin trapping agent: PBN (N-tert-Butyl-α-phenylnitrone) (manufactured by Wako Pure Chemical Industries) was used, and the spin trapping agent reagent was prepared to 2.55M with 50% ethanol, 0.16mL of which was added to 8mL of sample and then stirred thoroughly. Heating was carried out at 60°C with this solution in a thermostatic bath, hydroxy radical generated at each time was measured by the ESR, and the peak height of the hydroxy radical (PBN-OH) was calculated as a relative ratio against Mn (internal standard). ESR measurement conditions were as shown in Table 4. When the amount of radicals generated (relative ratio against Mn) is taken as the vertical axis and the heating time (min) is taken as the horizontal axis, the hydroxy radical generated when each sample was heated can be represented by an approximate linear equation having a certain slope, and the slope of this linear equation (radical generation velocity) was evaluated as the amount of radicals generated.

**(Table 4)**

| | |
|---|---|
| Powder | 4mW |
| Modwid | 0. 1mT |
| C. Field | 335. 500mT |
| Amp | 1000 |
| SwWid | (±) 5mT |
| TimeC | 1sec |
| SwTime | 4min |
| Mn | 550nm |

### [Example 1]

(Comparison of coffee beverages test-produced with beans having different degrees of roasting)

Chlorogenic acids content, area ratio of Constituents α and β, and amount of radicals generated at heating, of coffee beverages test-produced separately with coffee beans having different degrees of roasting were investigated.

A semi-hot air drum sample roaster having a 5kg pan was used for roasting of coffee beans. After ignition to the burner, adjustment was made to medium heat, at the point where the internal temperature of the drum became 200°C, 3kg of Brazil-produced beans were fed. While maintaining the heating power of the burner at medium heat, roasting was carried out until the target degree of roasting was reached, and after roasting, discharging and cooling were performed. The roasting time and drum internal temperature at discharge time for each roast bean used in the present test were as shown in Table 5. The roasted coffee beans were ground with a coffee cutter and the surface color was measured with the spectrophotometric colorimeter SE2000 from Nippon Denshoku Industries Co.,Ltd.

**(Table 5)**

| | L value | Roasting time | Discharge temperature |
|---|---|---|---|
| Slight roast roasted coffee bean | 32 | 10 minutes 00 seconds | 190 degree C |
| Medium roast roasted coffee bean | 21 | 11 minutes 50 seconds | 200 degree C |
| Deep roast roasted coffee bean | 17 | 12 minute 10 seconds | 218 degree C |

Extraction of coffee beverage was done by feeding 300g of ground roasted coffee beans into a coffee extractor. After the bean surface was leveled, it was showered from the upper part of the extractor with hot water at 95°C, and after verifying that hot water penetrated the entirety of the beans, extract was recovered while continuing the showering.

Thereafter, the obtained extract was cooled to on the order of 30°C in order to retain the quality. In addition, a flannel cloth was used to carry out filtration of the cooled extract to eliminate insoluble solid content of coffee. Finally, approximately 1500g of extract was obtained, corresponding to a 5-fold amount with respect to coffee beans. The extraction efficiency estimate was 25%, and the time from the beginning of showering to the completion of extract recovery was 30 minutes.

The preparation of coffee extract was adjusted with distilled water so as to have an amount of solid coffee of 1.0% by weight, and 0.05% by weight of sodium bicarbonate was added simultaneously to adjust black coffee.

Filling and sterilization method was as follows; the prepared black coffee was heated to 90°C then filled into a can, and seaming was carried out. Thereafter, retort sterilization was carried out under the conditions of 121°C and 10 minutes.

**(Table 6)**

| | Color of material coffee beans | | | Amount of chloroge nic acids | 5-CQA/a* 100 (%) | α/β*100 (area ratio) | Amount of radicals generated |
|---|---|---|---|---|---|---|---|
| | L | L | L | | | | |
| | value | value | value | | | | |
| | 32 | 21 | 17 | (ppm)^{a} | | | (slope of linear equation) |
| Sample 1 | 100% | | | 1540 | 32.9 | 2.9 | 0-0482 |
| Sample 2 | | 100% | | 830 | 31.4 | 19.0 | 0.0173 |
| Sample 3 | | | 100% | 360 | 28.0 | 91.4 | 0.0050 |

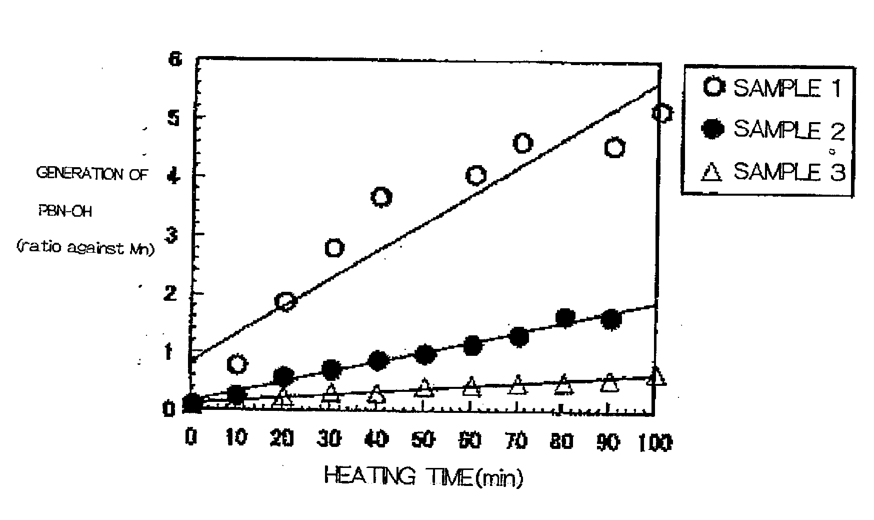

Amount of radicals generated during heating of each coffee beverage

From the results of Table 6, in the coffee beverages test-produced with raw material beans having different degrees of roasting, for sample 1 with slightly roasted beans as raw materials, the content in chlorogenic acids was high, and since there was little α constituent and abundant β constituent, the area ratio α/β value was a low value. In addition, for sample 1, the amount of radicals generated at heating was also found to be large. On the other hand, for sample 3 with deeply roasted beans as raw material, the content in chlorogenic acids decreased, and as α constituent increased and β constituent decreased, the area ratio α/β value was a higher value. In addition, for sample 3, the amount of radicals generated at heating was also found to be small.

### [Example 2]

(Comparison of coffee beverages blending coffee beans having different degrees of roasting)

Chlorogenic acids content, area ratio of Constituents α and β, and the amount of radicals generated at heating of coffee beverages test-produced by blending coffee beans having different degrees of roasting were investigated.

Green beans roasting method and coffee beverage preparation method were carried out by methods similar to Example 1. Coffee beans having different degrees of roasting were blended as described below, a coffee beverage was prepared by the preparation method of Example 1 such that the amount of solid coffee was 1.0% by weight, and the amount of chlorogenic acids, constituents (α and β), and the amount of radicals generated were investigated. The results are shown in Table 7.

**(Table 7)**

| | Blending ratio of material coffee beans | | Amount of chlorogenic acids (ppm)^{a} | 5-CQA/a* 100 (%) | α/β*100 (area ratio) | Amount of radicals generated (slope of linear equation) |
|---|---|---|---|---|---|---|
| | L value 32 | L value 17 | | | | |
| Sample 1 | 100% | 0% | 32.9 | 1540 | 2.9 | 0.0482 |
| Sample 2 | 75% | 25% | 32.6 | 1230 | 12.2 | 0.0290 |
| Sample 3 | 50% | 50% | 32.0 | 930 | 25.9 | 0.0190 |
| Sample 4 | 25% | 75% | 30.9 | 630 | 47.5 | 0.0090 |
| Sample 5 | 0% | 100% | 28.0 | 360 | 91.4 | 0.0050 |

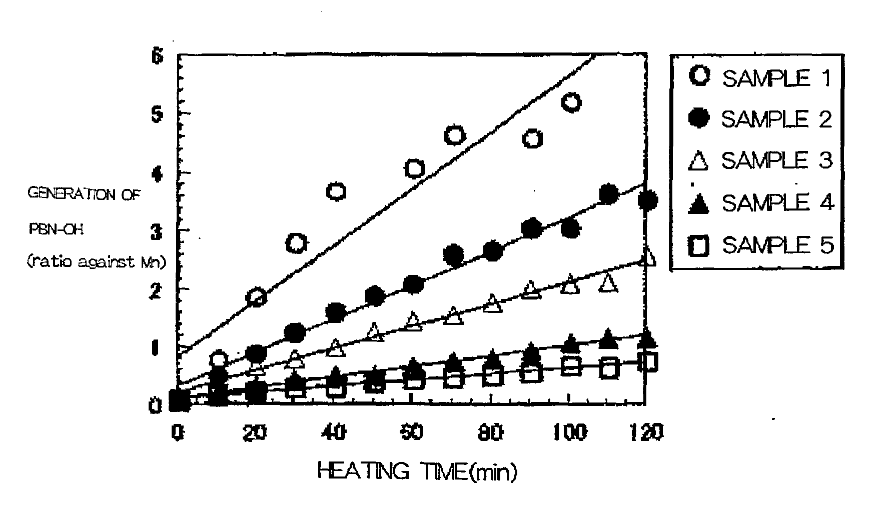

Amount of radicals generated during heating of each coffee beverage

From the results of Table 7, also with coffee beverages blending raw material beans having different degrees of roasting, for samples 1 and 2 with high blending ratio of slightly roasted beans, the chlorogenic acid content was high and the area ratio of α constituent and β constituent had a low value. In addition, samples 1 and 2 were also found to have large amounts of radical generated at heating. On the other hand, for samples 4 and 5 with high blending ratio of deeply roasted beans, chlorogenic acids content was low, and the area ratio of α constituent and β constituent also had a high value. In addition, for samples 4 and 5, the amount of radicals generated at heating was also found to be lower. From these results, it was found that, in coffee beverages test-produced with coffee beans blending slightly roasted beans in abundance, the chlorogenic acids content was high, furthermore, the area ratio of α constituent and β constituent was low and the amount of radicals generated at heating was large.

### [Example 3]

(Relationship between chlorogenic acids content, α constituent/β constituent area ratio and amount of radicals generated at heating, and sensory evaluation after heat storage)

The influence on the deterioration of quality after heat storage (at 70°C for two weeks) exerted by the chlorogenic acids content, the area ratio of α constituent and β constituent, and the amount of radicals generated at heating of coffee beverages test-produced by blending different degrees of roasting raw material beans was investigated.

Green beans roasting method and coffee beverage preparation method were carried out by methods similar to Example 1. After storage at 70°C for two weeks, sensory evaluation and a five-stage sourness intensity evaluation were carried out for each sample. Note that the sensory evaluation was carried out by five panelists who have excellent identification capabilities regarding coffee flavor.

Similarly to Example 2, coffee beans having different degrees of roasting were blended as shown in Table 8, a coffee beverage was prepared by the preparation method of Example 1 such that the amount of solid coffee was 1.0% by weight, and the amount of chlorogenic acids, constituents (α and β), and the amount of radicals generated were investigated.

**(Table 8)**

| | Blending ratio of material coffee beans | | | | Amount of chlorogenic acids (ppm) ^{a} | 5-CQA/ a*100 (%) | α/β*100 (area ratio) | Amount of radicals generated (slope of linear equation) |
|---|---|---|---|---|---|---|---|---|
| | L value 32 | L value 17 | L value 16 | L value 15 | | | | |
| Sample 1 | 75% | 25% | | | 1230 | 32.6 | 12.2 | 0.0290 |
| Sample 2 | 50% | 50% | | | 970 | 32.0 | 23.7 | 0.0190 |
| Sample 3 | 40% | 60% | | | 840 | 31.6 | 30.8 | 0.0130 |
| Sample 4 | 30% | 70% | | | 710 | 31.4 | 40.5 | 0.0078 |
| Sample 5 | 20% | 80% | | | 600 | 30.7 | 49.4 | 0.0084 |
| Sample 6 | 10% | 90% | | | 490 | 29.5 | 62.2 | 0.0081 |
| Sample 7 | 5% | 95% | | | 440 | 28.8 | 72.2 | 0.0070 |
| Sample 8 | 0% | 5% | | | 360 | 28.0 | 91.4 | 0.0050 |
| Sample 9 | | | 100% | | 230 | 25.2 | 150.2 | 0.0043 |
| Sample 10 | | | | 100% | 140 | 24.8 | 247.7 | 0.0044 |

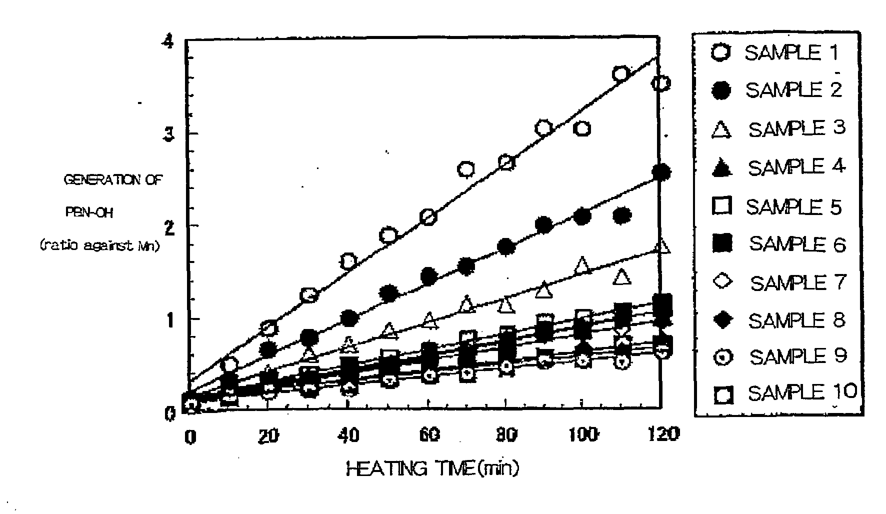

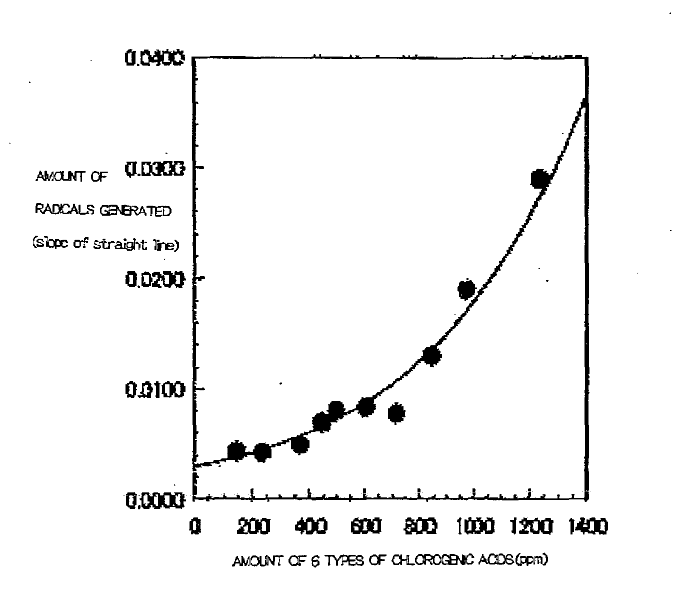

**(Table 9)**

| | Sensory evaluation | Sourness intensity | Overall evaluation |
|---|---|---|---|
| Sample 1 | Strong fermentation odor, abundant distracting flavors | 0. 25 | × |
| Sample 2 | Fermentation-like deterioration odor | 0.25 | × |
| Sample 3 | Somewhat fermentation-like deterioration odor | 1.38 | Δ |
| Sample 4 | Somewhat fermentation-like deterioration odor | 1.25 | Δ |
| Sample 5 | Weakest sourness | 1.75 | ○ |
| Sample 6 | Weakest sourness | 2.00 | ⊚ |
| Sample 7 | Somewhat strong sourness | 2.13 | ○ |
| Sample 8 | Strong sourness | 2.50 | Δ |
| Sample 9 | Strong sourness and abundant distracting flavors | 3.00 | × |
| Sample 10 | Abundant distracting flavors and burnt odor sensed | 2.75 | × |

From the results of Table 8 and Table 9, similarly as before, with coffee beverages blending coffee beans having different degrees of roasting, when the blending ratio of slightly roasted beans became higher, the chlorogenic acids content was high and the area ratio of α constituent and β constituent had a low value. In addition, amount of radicals generated at heating also became large when the blending ratio of slightly roasted beans became higher. On the other hand, when the blending ratio of deeply roasted beans became higher, chlorogenic acids content was low and the area ratio of α constituent and β constituent had also a high value. In addition, the amount of radicals generated at heating also became low when the blending ratio of deeply roasted beans became higher.

Resulting from the sensory evaluation after conservation at 70°C for two weeks, for samples 1 and 2 with high blending ratio of slightly roasted beans, fermentation-like deterioration odor could be strongly sensed, and for sample 1 distracting flavor could also be sensed abundantly. On the other hand, for samples 9 and 10, in which deeply roasted beans with a strong degree of roasting were used, distracting flavor, burnt odor, sourness and the like, were strongly sensed, and for sample 8, sourness was also sensed strongly. From the above results, it was thought that, when the blending ratio of slightly roasted beans became higher, chlorogenic acids content became large and the amount of radicals generated, which are considered to be one of the causes of deterioration, also became large, deterioration due to heat storage occurred, and fermentation odor and the like could be sensed strongly. In addition, with deeply roasted beans, if the degree of roasting became strong, the amount of chlorogenic acids became low and the amount of radicals generated also became low; however, after heat storage, distracting flavor, burnt taste, sourness and the like, tended to be stronger. From the above results, sample 3 to sample 8 had satisfactory sensory evaluation and good overall evaluation.

### [Example 4]

(Comparison between coffee beverage test-produced with medium roasted beans and coffee beverage blending slightly roasted beans and deeply roasted beans)

The amount of radicals generated at heating and the situation of quality deterioration after heat storage (at 70°C for two week) of coffee beverage from medium roasted beans and coffee beverage blending slightly roasted beans and deeply roasted beans with the same extent in chlorogenic acids content were investigated.

Green beans roasting method and coffee beverage preparation method were carried out by methods similar to Example 1. Sensory evaluation method was carried out by a similar method to Example 3.

Similarly to Example 2, coffee beans having different degrees of roasting were blended as shown in Table 10, a coffee beverage was prepared by the preparation method of Example 1 such that the amount of solid coffee was 1.0% by weight, and the amount of chlorogenic acids, constituents (α and β), and the amount of radicals generated were investigated.

**(Table 10)**

| | Blending ratio of material coffee beans | | | | Amount of chlorogenic acids (ppm) ^{a} | 5-CQA/ a*100 (%) | α/β*100 (area ratio) | Amount of radicals generated (slope of linear equation) |
|---|---|---|---|---|---|---|---|---|
| | L value 32 | L value 25 | L value 20 | L value 17 | | | | |
| Sample 1 | | | 100% | | 760 | 30.0 | 28.4 | 0.0099 |
| Sample 2 | 20% | | | 80% | 730 | 30.2 | 37.9 | 0.0105 |
| Sample 3 | | 100% | | | 1330 | 33.1 | 5.8 | 0.0416 |
| Sample 4 | 50% | | | 50% | 1070 | 31.5 | 20.5 | 0.0183 |

**(Table 11)**

| Sensory evaluation results and sourness intensity after storage at 70°C for two weeks | | | |
|---|---|---|---|
| | Sensory evaluation | Sourness intensity | Overall evaluation |
| Sample 1 | Somewhat sourness taste sensed, abundant distracting flavors, strong sourness | 3.00 | × |
| Sample 2 | Somewhat sourness taste sensed but satisfactory flavor and also has bitterness | 2.00 | O |
| Sample 3 | Grainy taste sensed, abundant distracting flavors, strong sourness | 2.25 | × |
| Sample 4 | Distracting flavors somewhat present, fermentation-like deterioration odor | 1.25 | × |

From the results of Table 10 and Table 11, samples 1 and 3 test-produced with medium roasted beans alone had graininess, and distracting flavor, sourness and the like could be sensed strongly; however, by blending deeply roasted beans and slightly roasted beans, for sample 2, deeply roasted beans-derived bitterness could be sensed and the flavor was satisfactory. Consequently, even with the same extent of chlorogenic acids concentration, blending deeply roasted beans and slightly roasted beans gave satisfactory flavor and stability after heat storage. However, for sample 4, with a high blending ratio of slightly roasted beans and large amount of chlorogenic acids, fermentation odor could be sensed.

### Industrial applicability

According to the present invention, by giving the above-mentioned preparation method, a container-packed coffee beverage can be provided, having an excellent taste while containing chlorogenic acids to a suitable extent, which are useful constituents found in coffee, and furthermore, whose deterioration at heating has been suppressed.

## Claims

1. A method for preparing a container-packed coffee beverage,
comprising the steps of
preparing a coffee extract by extracting coffee beans;
adding a constituent selected from the group consisting of sugars, milk constituent, antioxidant, pH adjuster, emulsifier and flavors; and
filling the preparation into a container;
in which the coffee beans are a blend of coffee beans containing roasted coffee beans having an L value of 16 to 21.5 and roasted coffee beans having an L value of 22 to 33, at a ratio of 100:0 to 60:40; and
wherein the following constituents (A), (B) and (C) are contained in the coffee extract:
(A) α constituent:
of which the peak, appearing at a retention time of 2.0 to 2.3 minutes and having a maximum absorption wavelength of 257.9 nm, is obtained in a chromatogram by constituent analysis of the coffee extract at a detection wavelength of 260 nm using a high performance liquid chromatography apparatus under conditions given below;
(B) constituent:
of which the peak, appearing at a retention time of 2.7 to 3.2 minutes and having a maximum absorption wavelength of 263.8 nm, is obtained in a chromatogram by constituent analysis of the coffee extract at a detection wavelength of 260 nm using a high performance liquid chromatography apparatus under conditions given below; and
(C) chlorogenic acids;
whereby the peak area ratio of constituent (A) and constituent (B) {(A)/(B)}×100 is 30 to 100; and
the chlorogenic acids contain 5-caffeoylquinic acid at a content in the constituent (C) which is adjusted to be 28.0 to 35.0% by weight;
the conditions for performing the high performance liquid chromatography being as follows:
Column: Inertsil ODS-2 ∅3.0 x 250mm;
Mobile phase: Gradient elution method by
A Solution 3% acetonitrile solution containing 0.05M acetic acid;
B Solution 100% acetonitrile solution containing 0.05M acetic acid;
Volume injected:10 µL;
Flow rate: 0.43 mL/min;
Column temperature: 40 degree C;
Detector: PDA UV 210nm to 400nm.

2. The method for preparing a container-packed coffee beverage as recited in claim 1, wherein chlorogenic acids are added to said obtained coffee extract.

## Patentansprüche

1. Verfahren zur Herstellung eines Behälter-verpackten Kaffeegetränks, umfassend die Schritte
Herstellung eines Kaffeeextrakts durch Extrahieren von Kaffeebohnen; Zugabe eines Bestandteils, der ausgewählt wird aus der aus Zuckern, Milchbestandteilen, Antioxidans, pH-Einstellungsmittel, Emulgator und Geschmacksstoffen bestehenden Gruppe; und
Abfüllen des Präparats in einen Behälter;
wobei die Kaffeebohnen ein Gemisch aus Kaffeebohnen sind, das geröstete Kaffeebohnen mit einem L-Wert von 16 bis 21,5 und geröstete Kaffeebohnen mit einem L-Wert von 22 bis 33 in einem Verhältnis von 100 : 0 bis 60 : 40 enthält; und
wobei die folgenden Bestandteile (A), (B) und (C) in dem Kaffeeextrakt enthalten sind:
(A) α-Bestandteil:
dessen Peak, der bei einer Retentionszeit von 2,0 bis 2,3 Minuten erscheint und eine maximale Absorptionswellenlänge von 257,9 nm aufweist, in einem Chromatogramm durch Bestandteilsanalyse des Kaffeeextrakts bei einer Nachweiswellenlänge von 260 nm unter Verwendung eines Hochleistungsflüssigkeits-Chromatographie-Geräts unter den im Folgenden angegebenen Bedingungen erhalten wird;
(B) β-Bestandteil:
dessen Peak, der bei einer Retentionszeit von 2,7 bis 3,2 Minuten erscheint und eine maximale Absorptionswellenlänge von 263,8 nm aufweist, in einem Chromatogramm durch Bestandteilsanalyse des Kaffeeextrakts bei einer Nachweiswellenlänge von 260 nm unter Verwendung eines Hochleistungsflüssigkeits-Chromatographie-Geräts unter den nachstehend angegebenen Bedingungen erhalten wird; und
(C) chlorogene Säuren:
wobei das Peakflächenverhältnis von Bestandteil (A) und Bestandteil (B) {(A)/(B)} x 100 30 bis 100 beträgt; und
die chlorogenen Säuren 5-Caffeoylchinasäure im Bestandteil (C) in einem Gehalt enthalten, der auf 28,0 bis 35,0 Gew.-% eingestellt wird;
wobei die Bedingungen zur Durchführung der Hochleistungsflüssigkeits-Chromatographie wie folgt sind:
Säule: Inertsil ODS-2 θ 3,0 x 250 mm;
mobile Phase: Gradientenelutionsmethode durch
A Lösung 3 % Acetonitril-Lösung, enthaltend 0,05 M Essigsäure;
B Lösung 100 % Acetonitril-Lösung, enthaltend 0,05 M Essigsäure;
injiziertes Volumen: 10 µL
Flussrate: 0,43 ml/min.
Säulentemperatur: 40°C
Detektor: PDA UV 210 nm bis 400 nm

2. Verfahren zur Herstellung eines Behälter-verpackten Kaffeegetränks wie in Anspruch 1 angegeben, wobei chlorogene Säuren zu dem erhaltenen Kaffeeextrakt gegeben werden.

## Revendications

1. Procédé pour la préparation d'une boisson au café emballé dans un récipient, comprenant les étapes de:
préparer une extrait de café par extraire des grains de café; ajouter un constituant selectionné parmi le groupe consistant en les sucres, le constituant de lait, l'antioxydant, le régulateur de pH, l'émulateur et les aromes;
et
remplir un récipient de la préparation;
dans lequel les grains de café sont un melange de grains de café contenant de grains de café torréfiés ayant une valeur L de 16 à 21,5 et de grains de café torréfiés ayant un valeur L de 22 à 33 à un rapport de 100:0 à 60:40; et
dans lequel les constituants suivants (A), (B) et (C) sont contenus dans l'extrait de café;
(A) constituant α:
dont le pic apparaissant à un temps de retention de 2,0 à 2,3 minutes et ayant une longueur d'onde maximale de 257,9 nm est obtenu dans un chromatogramme par analyse de constituants de l'extrait de café à une longueur d'onde de detection de 260 nm en utilisant un appareil de chromatographie liquide à haute performance sous des conditions données ci-dessous;
(B) constituant ß:
dont le pic apparaissant à un temps de retention de 2,7 à 3,2 minutes et ayant une longueur d'onde maximale de 263,8 nm est obtenu dans un chromatogramme par analyse de constituant de l'extrait de café à une longueur d'onde de detection de 260 nm en utilisant un appareil de chromatographie liquide à haute performance sous des conditions données ci-dessous;
et
(C) des acides chlorogeniques;
par lesquels le rapport de superficie de pic du constituant (A) et du constituant (B) {(A)/(B)}x100 est 30 à 100; et
les acides chlorogeniques contiennent d'acide 5-cafféoylquinique à une teneur dans le constituant (C) qui est ajustée d'une manière d'être 28,0 à 35,0 % en poids ;
les conditions de mettre en oeuvre la chromatographie liquide étant les suivantes:
colonne: Inertsil ODS-2 ∅0 3,0 x 250 mm;
phase mobile: méthode d'élution par gradient par
solution A: solution d'acétonitrile 3 % contentant d'acide acétique 0,05 M;
solution B: solution d'acétonitrile 100 % contentant d'acide acétique 0,05 M;
volume injecté: 10 µl;
débit d'écoulement: 0,43 ml/min;
température de colonne: 40 °C;
détecteur: PDA UV 210 nm à 400 nm.

2. Procédé pour la préparation d'une boisson au café emballé dans un récipient selon la revendication 1, dans lequel des acides chlorogeniques sont ajoutés audit extrait de café.
